# FASCICULE DE BREVET EUROPEEN

(11) **EP 0 693 354 B1**
(45) Date de publication et mention de la délivrance du brevet: **21.10.1998**
(21) Numéro de dépôt: 95401705.9
(22) Date de dépôt: 18.07.1995
(51) Int. Cl.: B29C 44/04, B29C 33/76

(54) **Perfectionnements aux procédés et dispositifs de moulage de matelassures composites en mousse**
Verbesserungen an Verfahren und Maschinen zum Formen von Kompositschaumstoffpolster
Improvements in methods and machines for moulding composite foam upholstery

(30) Priorité: 21.07.1994 FR 9409042
(43) Date de publication de la demande: 24.01.1996
(73) Titulaire: BERTRAND FAURE EQUIPEMENTS S.A., 92100 Boulogne (FR)
(72) Inventeur: Vu Khac, Tham, F-91150 Etampes (FR); Joubert, Alexis, F-75015 Paris (FR); Blanc, Eric, F-45300 Bondaroy (FR)
(74) Mandataire: Burbaud, Eric

(56) Documents cités:
- EP-A- 0 227 489
- EP-A- 0 431 981
- GB-A- 2 157 559

## Description

La présente invention est relative aux procédés et dispositifs de moulage de matelassures composites en mousse, c'est-à-dire de matelassures qui sont constituées de plusieurs parties formées dans des mousses souples ayant des caractéristiques différentes, en particulier dans des mousses ayant des souplesses différentes. Ces matelassures sont destinées à équiper des assises ou dossiers de sièges, notamment pour véhicules.

Le document DE-A-35 13 651 décrit un dispositif de moulage pour mouler une matelassure présentant des parties constituées de mousses souples différentes, ce dispositif comportant :
- un moule qui présente d'une part une partie inférieure dite cuve, qui est dotée d'une ouverture supérieure, et d'autre part une partie supérieure dite couvercle, qui est mobile par rapport à la cuve entre une position ouverte où il dégage l'ouverture supérieure de la cuve et une position fermée où il obture ladite ouverture supérieure, la cuve et le couvercle délimitant ensemble, lorsque le couvercle est dans sa position fermée, une cavité de moulage qui présente un fond et une face supérieure sensiblement horizontaux, et quatre faces latérales qui définissent une épaisseur de la matelassure à mouler,
- et au moins une paroi de séparation sensiblement rigide et lisse, qui est mobile par rapport à la cuve entre une position de moulage et une position de démoulage, cette paroi de séparation, lorsqu'elle est dans sa position de moulage, s'étendant sensiblement horizontalement selon une direction dite longitudinale à partir d'une des faces latérales de la cavité de moulage, la paroi de séparation présentant une partie arrière au voisinage de cette face latérale et ladite paroi de séparation étant supportée à partir de cette partie arrière.

Ce dispositif présente les inconvénients suivants :
- d'une part, la paroi de séparation présente des bords latéraux verticaux qui s'étendent sur toute leur longueur au contact du fond et/ou de la face supérieure de la cavité de moulage, de sorte qu'il est nécessaire de retirer la paroi de séparation de la cavité de moulage pendant que la mousse est en train de se former dans ladite cavité de moulage, mais bien avant que la formation de la mousse ne soit-terminée, afin que. la matelassure moulée au moyen de ce dispositif ne présente pas de fentes verticales découpées dans ses faces principales (faces de plus grande surface), ce qui lui ôterait toute cohésion : ce dispositif est donc particulièrement délicat à utiliser, dans la mesure où le retrait de la paroi de séparation, s'il est effectué trop tôt, peut conduire à un mélange non souhaité des mélanges réactionnels disposés dans le moule, et s'il est effectué trop tard, peut conduire à la formation d'une matelassure dont les faces principales sont fendues, ce qui lui ôte toute cohésion,
- et d'autre part, la paroi de séparation est retirée de la cavité de moulage par coulissement au travers d'une fente ménagée dans les parois du moule, de sorte que cette paroi doit en pratique présenter un profil longitudinal rectiligne, ce qui limite les formes possibles de la surface de séparation entre les parties de la matelassure qui sont constituées de mousses différentes.

La présente invention a notamment pour but de remédier à ces inconvénients.

A cet effet, selon l'invention, un dispositif de moulage du genre en question est essentiellement caractérisé en ce que la paroi de séparation traverse l'ouverture supérieure de la cuve du moule lorsqu'elle est déplacée entre sa position de moulage et sa position de démoulage, la paroi de séparation, lorsqu'elle est dans sa position de moulage, n'étant pas en contact avec le fond ni avec la face supérieure de la cavité de moulage, et la paroi de séparation, lorsqu'elle est dans sa position de démoulage, étant suffisamment relevée au-dessus de la cuve pour permettre qu'une matelassure précédemment moulée puisse être déboîtée de la paroi de séparation selon la direction longitudinale de ladite paroi de séparation en éloignant la matelassure de la partie arrière de la paroi de séparation, la paroi de séparation ayant un profil longitudinal compatible avec ce déboîtement compte tenu de la souplesse des mousses constituant la matelassure.

Ainsi, la paroi de séparation n'a pas besoin d'être retirée hors de la cavité de moulage pendant la formation de la mousse de la matelassure, et la fente qui est laissée dans l'épaisseur de la matelassure après son déboîtement de la paroi de séparation ne modifie pas sensiblement les caractéristiques mécaniques de la matelassure.

Par ailleurs, du fait de la souplesse relative des mousses constituant la matelassure, le profil longitudinal de la paroi de séparation peut être choisi relativement librement en fonction des caractéristiques mécaniques finales souhaitées pour la matelassure, le déboîtement de la matelassure par rapport à la paroi de séparation restant possible même si le profil longitudinal de ladite paroi de séparation n'est pas rectiligne ou ne présente pas un rayon de courbure constant.

Dans des modes de réalisation préférés du dispositif selon l'invention, on a recours en outre à l'une et/ou à l'autre des dispositions suivantes :
- la paroi de séparation est montée pivotante par rapport à la cuve ;
- la paroi de séparation présente un profil longitudinal courbe ;
- le dispositif comporte trois parois de séparation juxtaposées dont les directions longitudinales sont sensiblement parallèles et qui s'étendent toutes dans la cavité de moulage à partir de la même face latérale de ladite cavité de moulage lorsque lesdites parois de séparation sont dans leur position de moulage, ces trois parois de séparation comprenant une paroi centrale relativement large et deux parois latérales relativement étroites qui sont disposées respectivement le long de deux faces latérales opposées de la cavité de moulage ;
- les trois parois de séparation sont montées pivotantes autour d'un axe commun ;
- la paroi de séparation comporte des moyens de chauffage.

L'invention a également pour objet un procédé pour mouler une matelassure présentant des parties constituées de mousses souples différentes au moyen d'un dispositif tel que décrit ci-dessus, ce procédé comportant les étapes suivantes :
a/ injecter un premier mélange réactionnel moussant sur le fond de la cavité de moulage, tandis que le couvercle du moule est en position ouverte,
b/ injecter un deuxième mélange réactionnel moussant sur chaque paroi de séparation tandis qu'elle est dans sa position de moulage,
c/ fermer le couvercle du moule pendant le moussage des premier et deuxième mélanges réactionnels jusqu'à l'obtention de la matelassure,
d/ ouvrir le couvercle du moule,
e/ démouler la matelassure, tout en déplaçant chaque paroi de séparation de sa position de moulage à sa position de démoulage,
f/ déboîter la matelassure de la ou des parois de séparation par translation de cette matelassure dans la direction longitudinale de ladite ou desdites parois de séparation, en éloignant ladite matelassure de la partie arrière de la ou des parois de séparation.

L'étape a/ de ce procédé peut être conduite pendant que la ou les parois de séparation sont dans leur position de démoulage, ladite ou lesdites parois de séparation étant ensuite placées dans leur position de moulage avant l'étape b/ ci-dessus.

En variante, l'étape a/ ci-dessus peut également être conduite avec la ou les parois de séparation déjà en position de moulage, mais laissant des espaces libres autour d'elles, l'injection du premier mélange réactionnel sur le fond de la cavité de moulage étant effectué à travers ces espaces libres.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue en perspective d'un moule selon une forme de réalisation de l'invention, en position ouverte,
- la figure 2 est une vue en coupe longitudinale du moule de la figure 1, pendant l'injection d'un premier mélange réactionnel dans le fond de ce moule,
- la figure 2A est une vue similaire à la figure 2, illustrant une variante du procédé d'injection du premier mélange réactionnel dans le fond du moule,
- la figure 3 est une vue similaire à la figure 2, dans une étape d'injection d'un deuxième mélange réactionnel au-dessus des parois de séparation du moule,
- la figure 4 est une vue similaire à la figure 3, le moule étant fermé et la mousse étant en formation à l'intérieur de la cavité de moulage,
- la figure 5 est une vue du moule de la figure 4, en coupe transversale selon la ligne V-V de la figure 4,
- et la figure 6 est une vue en coupe longitudinale illustrant le mode de démoulage d'une matelassure après sa fabrication.

Sur les différentes figures, on a représenté les étapes successives de fabrication d'un coussin ou matelassure en mousse au moyen d'un moule 1, cette matelassure étant ici plus particulièrement destiné à une assise de siège automobile, bien que l'invention s'applique également à des matelassures de dossiers de siège automobile, ou à tout autre type de matelassure en mousse.

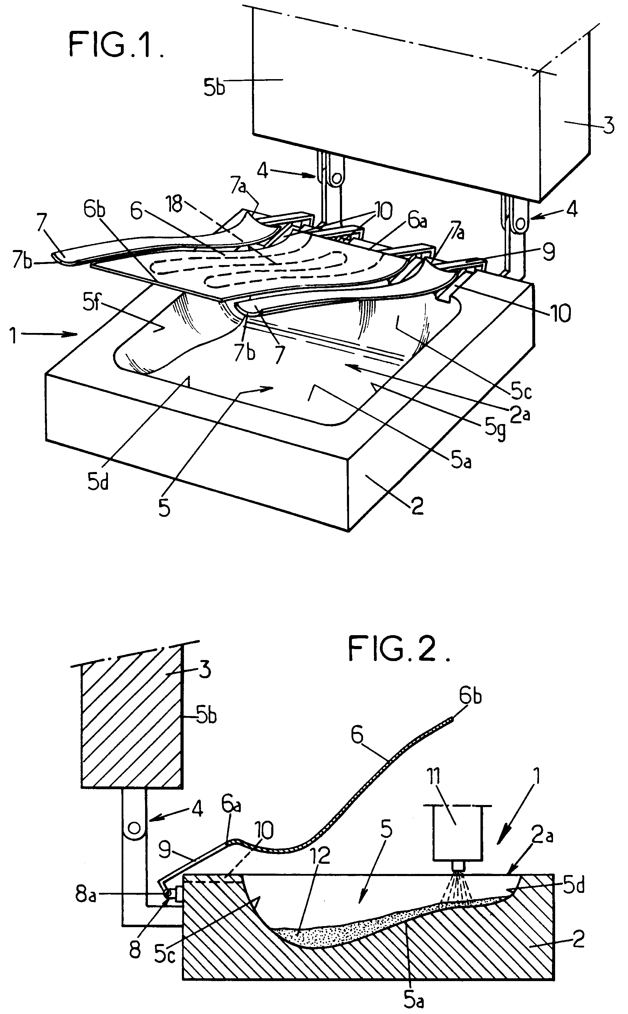

Comme on peut le voir en particulier sur les figures 1, 2 et 5, le moule 1 est constitué d'une cuve inférieure 2 fixe, sur laquelle est monté un couvercle 3 pivotant, au moyen d'une articulation 4.

La cuve 2 est évidée et présente une ouverture supérieure 2a qui peut être fermée par le couvercle 3. Lorsque le couvercle est en position fermée, il définit avec la cuve une cavité de moulage 5 qui détermine la forme extérieure des matelassures pouvant être réalisées au moyen du moule.

Cette cavité de moulage présente un fond 5a sensiblement horizontal, une face supérieure 5b également sensiblement horizontale, et quatre faces latérales 5c, 5d, 5f, 5g.

Dans l'exemple représenté, le fond 5a détermine la forme de la face supérieure de la matelassure d'assise de siège, la face 5b détermine la forme de la face inférieure de cette matelassure, les faces 5c et 5d correspondent respectivement aux bords avant et arrière de ladite matelassure, et les faces 5f et 5g correspondent aux deux bords latéraux de cette matelassure. Dans tous les cas, quel que soit le type de matelassure réalisé, les faces 5a et 5b correspondent aux deux faces principales de la matelassure, c'est-à-dire les deux faces de plus grande surface, qui sont destinées à recevoir la charge appliquée à la matelassure (poids de l'utilisateur pour une matelassure d'assise, appui du dos pour une matelassure de dossier).

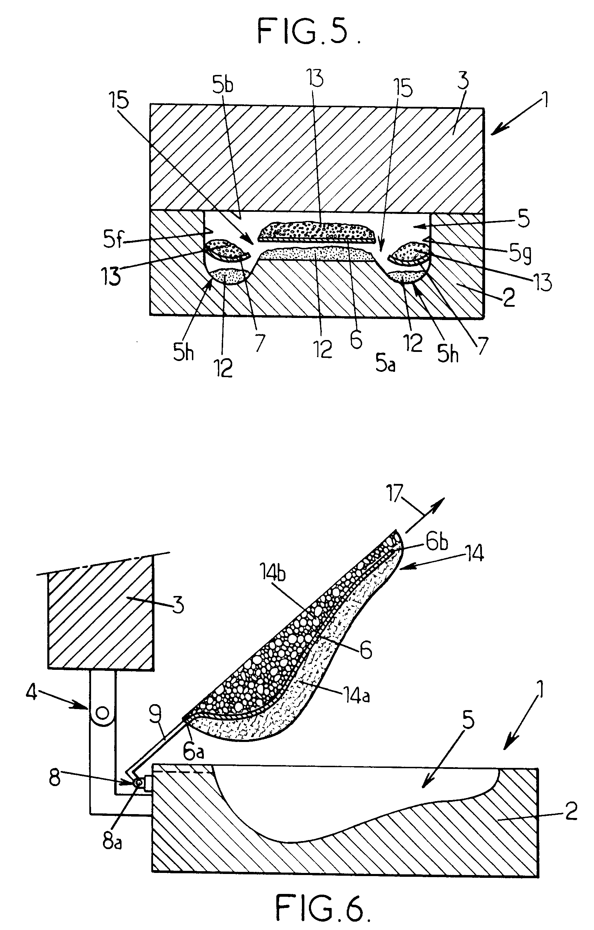

Comme on peut le voir en particulier sur la figure 5, dans l'exemple particulier représenté sur les dessins, le fond 5a de la cavité de moulage présente deux renfoncements latéraux longitudinaux au voisinage des deux faces latérales 5f et 5g de ladite cavité de moulage. Ces renfoncements 5h sont destinés à former des bourrelets sur les bords latéraux de la matelassure d'assise.

Afin d'optimiser les caractéristiques mécaniques des matelassures de siège, et notamment afin qu'elles fournissent à la fois un bon confort et un bon maintien à l'utilisateur, il est souvent souhaitable de les rendre composites, c'est-à-dire de faire en sorte qu'elles soient constituées de plusieurs parties constituées dans des mousses ayant des souplesses différentes.

Par exemple, il est souvent souhaitable que les parties latérales de la matelassure soient plus fermes que la partie centrale, qui constitue la zone d'assise ou la zone d'appui du dos. De plus, il est également souvent souhaitable que la face de la matelassure qui présente la zone d'assise ou la zone d'appui du dos de l'utilisateur soit plus souple que la face opposée, ceci afin d'optimiser le confort de l'utilisateur.

Pour cela, le moule 1 est doté de trois parois de séparation 6, 7, savoir une paroi de séparation centrale 6 et deux parois de séparation latérales 7, qui permettent le moulage de la matelassure avec des parties constituées de mousses de duretés différentes, comme il sera expliqué ci-après.

Les parois de séparation 6, 7 présentent une surface lisse et elles sont formées dans un matériau relativement rigide tel que métal, matière plastique, matériau composite, etc.

Eventuellement, le dispositif pourrait comporter uniquement la paroi de séparation centrale 6, ou uniquement les deux parois de séparation latérales 7, sans pour autant sortir du cadre de l'invention.

Chaque paroi de séparation 6, 7 s'étend longitudinalement entre un bord arrière, respectivement 6a, 7a, et un bord avant, respectivement 6b, 7b, et elle est supportée à son bord arrière par un bras de support 9 qui s'étend sensiblement dans le prolongement de ladite paroi de séparation et qui est monté pivotant sur la cuve 2 au moyen d'une articulation 8.

Cette articulation 8 permet le pivotement des différentes parois de séparation 6, 7 autour d'un axe de pivotement 8a commun, cet axe commun pouvant être matérialisé par une pièce mécanique commune aux différentes parois de séparation ou bien représentant simplement la direction d'alignement des points de pivotement des différentes parois de séparation.

L'articulation 8 des parois de séparation 6, 7, peut être disposée à l'extérieur de la cuve 2, comme représenté sur les dessins, mais également à l'intérieur de la cavité de moulage 5.

L'axe de pivotement 8a des parois de séparation 6, 7, peut également être commun avec l'axe de pivotement du couvercle 3, ou encore les parois de séparation peuvent être articulées sur le couvercle 3, sur un porte-moule auquel est fixée la cuve 2, ou sur tout autre élément faisant partie intégrante du moule.

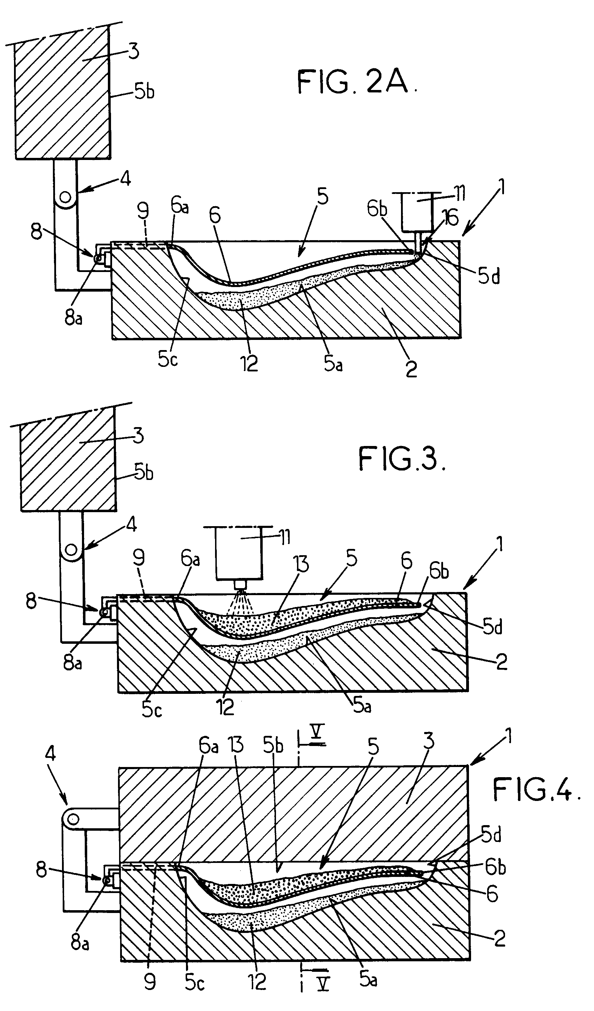

Grâce à l'articulation 8, chaque paroi de séparation 6, 7 est mobile entre d'une part une position dite de moulage, où elle est disposée à l'intérieur de la cavité de moulage 5 (figures 2A, 3, 4, 5), et d'autre part une position de démoulage, où elle est disposée au-dessus de la cuve 2 lorsque le couvercle 3 est ouvert (figures 1, 2, 6).

Chaque paroi de séparation 6, 7, présente un profil longitudinal qui peut être adapté suivant l'effet recherché, par exemple un profil rectiligne, un profil qui suit sensiblement la forme du fond 5a de la paroi de moulage, ou encore un profil intermédiaire comme représenté sur les dessins.

Ce profil longitudinal peut être choisi avec une grande liberté, sous réserve de permettre le dégagement des matelassures par déboîtement lors de leur démoulage, comme il sera expliqué ci-après.

Le profil transversal des parois de séparation 6, 7, est sensiblement horizontal, c'est-à-dire éventuellement incliné, mais avec une inclinaison assez faible pour éviter l'écoulement, vers le fond 5a de la cavité de moulage, des mélanges réactionnels que l'on injecte au-dessus des parois de séparation, comme il sera expliqué ci-après. Ce profil transversal peut être rectiligne, ou bien il peut former une cuvette, arrondie ou non, dont la concavité est tournée vers le haut.

Par ailleurs, les parois de séparation 6, 7 présentent une largeur constante sur toute leur longueur, ou éventuellement une largeur décroissante depuis leur bord arrière vers leur bord avant, pour permettre le déboîtement de la matelassure après son moulage, comme il sera expliqué ci-après.

Lorsque les parois de séparation 6, 7 sont dans leur position de moulage (figures 2A, 3, 4, 5), elles sont disposées avec leurs directions longitudinales sensiblement horizontales, les bras de support 9 pénétrant dans des gorges 10 formées dans la face supérieure de la cuve 2, et les bords arrières, respectivement 6a, 7a des différentes parois de séparation venant en contact avec une même face latérale 5c de la cavité de moulage, afin que la matelassure formée dans la cavité de moulage ne présente pas de mousse entre les bords arrières 6a, 7a des parois de séparation et la face latérale 5c de la cavité de moulage : autrement dit, les bords arrières 6a, 7a peuvent venir s'appuyer contre la face latérale 5c, comme représenté sur les dessins, ou bien lesdits bords arrières peuvent pénétrer sur une certaine distance dans les parois du moule à l'interface entre la cuve et le couvercle.

Lorsque les parois de séparation 6, 7 sont dans leur position de moulage, elles peuvent s'étendre longitudinalement uniquement sur une partie de la longueur de la cavité de moulage 5 à partir de sa face latérale 5c, ou bien encore elles peuvent s'étendre sur toute la longueur de ladite cavité de moulage, les bords avant, respectivement 6b, 7b des parois de séparation venant alors en contact avec la face latérale 5d de la cavité de moulage.

Dans la position de moulage, les parois de séparation latérales 7 sont disposées au voisinage des faces latérales 5f et 5g de la cavité de moulage, c'est-à-dire dans l'exemple représenté, au-dessus des renfoncements 5h du fond de ladite cavité de moulage. Dans cette position, lesdites parois de séparation latérales peuvent être séparées des faces latérales 5f, 5g, par un espace, ou bien être en contact avec lesdites faces latérales 5f, 5g sur toute leur longueur, comme représenté sur la figure 5.

Dans tous les cas, lorsque les parois de séparation sont dans leur position de moulage, elles ne sont pas en contact avec le fond 5a de la cavité de moulage, ni avec sa face supérieure 5b lorsque le couvercle 3 est fermé, afin de ne pas laisser de fente dans les faces principales des matelassures formés dans le moule.

Eventuellement, la paroi de séparation centrale 6 et/ou les parois de séparation latérales 7 peuvent comporter des moyens de chauffage intégrés, par exemple une résistance chauffante 18 représentée uniquement sur la paroi 6 dans le cas particulier représenté sur la figure 1. Cette résistance chauffante peut être noyée dans le matériau constitutif de la paroi de séparation, en particulier lorsque la paroi de séparation est en matière plastique ou en matériau composite.

Pour réaliser une matelassure composite au moyen du moule qui vient d'être décrit, on peut procéder comme suit :
a) le couvercle 3 du moule étant en position ouverte et les parois de séparation 6, 7 étant dans leur position de démoulage (figures 1 et 2), on injecte un premier mélange réactionnel 12 sur le fond 5a de la cavité de moulage, au moyen d'une tête d'injection 11 ; ce mélange réactionnel peut être par exemple un mélange moussant de polyuréthane, qui est destiné à former une mousse relativement souple ;
b) le couvercle 3 du moule étant toujours en position ouverte, on rabat les parois de séparation 6, 7 dans leur position de moulage (figure 3) et un deuxième mélange réactionnel 13, par exemple un autre mélange moussant de polyuréthane destiné à former une mousse plus ferme que le premier mélange réactionnel, est injecté au-dessus des différentes parois de séparation 6, 7, au moyen d'une tête d'injection 11 qui peut être ou non la même que celle employée pour déposer le premier mélange réactionnel 12 ;
c) on ferme le couvercle 3 et on laisse se dérouler la réaction de moussage des mélanges réactionnels 12 et 13, éventuellement en chauffant la cuve 2 et/ou le couvercle 3 et/ou les parois de séparation 6, 7 (figures 4 et 5) : au cours de cette réaction, les parois de séparation 6 et 7 délimitent précisément les zones d'expansion respectives des premier et deuxième mélanges réactionnels 12 et 13 ;
d) lorsque la réaction de moussage est terminée, on ouvre le couvercle 3 ;
e) on démoule la matelassure 14 obtenue en la soulevant en même temps qu'on déplace les parois de séparation 6, 7 dans leur position de démoulage ;
f) puis on déboîte la matelassure 14 des parois de séparation 6, 7 en tirant sur cette matelassure dans la direction de la flèche 17, c'est-à-dire dans la direction longitudinale des parois de séparation et en éloignement par rapport au bord arrière 6a, 7a desdites parois de séparation : grâce à la souplesse des mousses constituant les différentes parties 14a, 14b de la matelassure, ce déboîtement se déroule sans endommagement de la matelassure, compte tenu du fait que la largeur des parois de séparation n'augmentent pas de leur bord arrière vers leur bord avant et compte tenu également du fait que le bord arrière desdites parois de séparation débouche sur toute sa largeur sur un des côtés de la matelassure.

La matelassure 14 ainsi formée présente une fente permanente dans son épaisseur, ce qui n'est pas gênant pour ses caractéristiques mécaniques, les différentes parties 14a et 14b de la matelassure étant par ailleurs solidarisées dans les zones correspondant aux espaces 15 et 16 où les mousses se sont formées l'une au contact de l'autre.

En variante, comme représenté sur la figure 2A, le premier mélange réactionnel 12 peut éventuellement être injecté sur le fond 5a de la cavité de moulage pendant que les parois de séparation 6, 7 sont déjà dans leur position de moulage, l'injection s'effectuant alors par les espaces 15, 16 laissés libres entre les parois de séparation 6 et 7, et entre lesdites parois de séparation et les faces latérales de la cavité de moulage.

Eventuellement, le mélange réactionnel injecté au-dessus de la paroi de séparation centrale 6 pourrait être différent du mélange réactionnel injecté au-dessus des parois de séparation latérales 7.

## Revendications

1. Dispositif pour mouler une matelassure (14) présentant des parties (14a, 14b) constituées de mousses souples différentes, ce dispositif comportant :
- un moule (1) qui présente d'une part une partie inférieure dite cuve (2), dotée d'une ouverture supérieure (2a), et d'autre part une partie supérieure dite couvercle (3), qui est mobile par rapport à la cuve entre une position ouverte et une position fermée, la cuve (2) et le couvercle (3) délimitant ensemble, lorsque le couvercle est dans sa position fermée, une cavité de moulage (5) qui présente un fond (5a) et une face supérieure (5b) sensiblement horizontaux, et quatre faces latérales (5c, 5d, 5f, 5g) qui définissent une épaisseur de la matelassure à mouler,
- et au moins une paroi de séparation (6, 7) sensiblement rigide et lisse, qui est mobile par rapport à la cuve (2) entre une position de moulage et une position de démoulage, cette paroi de séparation, lorsqu'elle est dans sa position de moulage, s'étendant sensiblement horizontalement selon une direction dite longitudinale à partir d'une (5c) des faces latérales de la cavité de moulage, la paroi de séparation (6, 7) présentant une partie arrière (6a, 7a) au voisinage de cette face latérale et ladite paroi de séparation étant supportée à partir de cette partie arrière, **caractérisé en ce que** la paroi de séparation traverse l'ouverture supérieure (2a) de la cuve du moule lorsqu'elle est déplacée entre sa position de moulage et sa position de démoulage, la paroi de séparation (6, 7), lorsqu'elle est dans sa position de moulage, n'étant pas en contact avec le fond (5a) ni avec la face supérieure (5b) de la cavité de moulage, et la paroi de séparation, lorsqu'elle est dans sa position de démoulage, étant suffisamment relevée au-dessus de la cuve pour permettre qu'une matelassure précédemment moulée puisse être déboîtée de la paroi de séparation selon la direction longitudinale de ladite paroi de séparation en éloignant la matelassure de la partie arrière de la paroi de séparation.

2. Dispositif selon la revendication 1, dans lequel la paroi de séparation (6, 7) est montée pivotante par rapport à la cuve (2).

3. Dispositif selon l'une quelconque des revendications 1 et 2, dans lequel la paroi de séparation (6, 7) présente un profil longitudinal courbe.

4. Dispositif selon l'une quelconque des revendications précédentes, comportant trois parois de séparation (6, 7) juxtaposées dont les directions longitudinales sont sensiblement parallèles et qui s'étendent toutes dans la cavité de moulage (5) à partir de la même face latérale (5c) de ladite cavité de moulage lorsque lesdites parois de séparation (6, 7) sont dans leur position de moulage, ces trois parois de séparation comprenant une paroi centrale (6) relativement large et deux parois latérales (7) relativement étroites qui sont disposées respectivement le long de deux faces latérales opposées (5f, 5g) de la cavité de moulage.

5. Dispositif selon la revendication 4, dans lequel les trois parois de séparation (6, 7) sont montées pivotantes autour d'un axe commun (8a).

6. Dispositif selon l'une quelconque des revendications précédentes, dans lequel la paroi de séparation (6, 7) comporte des moyens de chauffage (18).

7. Procédé pour mouler, au moyen d'un dispositif selon l'une quelconque des revendications précédentes, une matelassure (14) présentant des parties (14a, 14b) constituées de mousses souples différentes, ce procédé comportant les étapes suivantes :
a/ injecter un premier mélange réactionnel moussant (12) sur le fond (5a) de la cavité de moulage tandis que le couvercle (3) du moule est en position ouverte,
b/ injecter un deuxième mélange réactionnel moussant (13) sur chaque paroi de séparation (6, 7) tandis qu'elle est dans sa position de moulage,
c/ fermer le couvercle (3) du moule pendant le moussage des premier et deuxième mélanges réactionnels jusqu'à l'obtention de la matelassure (14),
d/ ouvrir le couvercle (3) du moule,
e/ démouler la matelassure (14), tout en déplaçant chaque paroi de séparation (6, 7) de sa position de moulage à sa position de démoulage,
f/ déboîter la matelassure (14) de la ou des parois de séparation par translation de cette matelassure dans la direction longitudinale de ladite ou desdites parois de séparation, en éloignant ladite matelassure de la partie arrière de la ou des parois de séparation.

8. Procédé selon la revendication 7, dans lequel, au cours de l'étape a/, chaque paroi de séparation (6, 7) est dans sa position de démoulage, puis est déplacée dans sa position de moulage avant l'étape b/.

9. Procédé selon la revendication 7, dans lequel, au cours de l'étape a/, chaque paroi de séparation (6, 7) est dans sa position de moulage, mais laisse des espaces libres (15, 16) autour d'elle, l'injection du premier mélange réactionnel sur le fond (5a) de la cavité de moulage étant effectuée à travers ces espaces libres.

## Claims

1. A device for molding padding (14) having portions (14a, 14b) constituted by foams of different flexibilities, said device comprising:
a mold (1) having firstly a bottom portion referred to as a "bowl" (2) that is provided with a top opening (2a), and secondly a top portion referred to as a "cover" (3) which is movable relative to the bowl between an open position and a closed position, the bowl (2) and the cover (3) co-operating, when the cover is in its closed position, to define a mold cavity (5) presenting a top face (5b) and a bottom (5a) that are substantially horizontal, and four lateral faces (5c, 5d, 5f, 5g) which define a thickness for the padding to be molded; and
at least one separation wall (6, 7) that is substantially rigid and smooth and that is movable relative to the bowl (2) between a molding position and an unmolding position, said separation wall, when in its molding position, extending substantially horizontally in a "longitudinal" direction from one of the lateral faces (5c) of the mold cavity, the separation wall (6, 7) having a rear portion (6a, 7a) in the vicinity of said lateral face, and said separation wall being supported from said rear portion;
the device being characterized in that the separation wall passes through the top opening (2a) of the mold bowl when it is displaced between its molding position and its unmolding position, the separation wall (6, 7), when in its molding position, being in contact neither with the bottom (5a) nor with the top face (5b) of the mold cavity, and the separation wall, when in its unmolding position, being raised far enough above the bowl to enable previously-molded padding to be disengaged from the separation wall along the longitudinal direction of said separation wall by moving the padding away from the rear portion of the separation wall.

2. A device according to claim 1, in which the separation wall (6, 7) is pivotally mounted relative to the bowl (2).

3. A device according to claim 1 or 2, in which the separation wall (6, 7) has a longitudinal profile that is curved.

4. A device according to any preceding claim, including three juxtaposed separation walls (6, 7) whose longitudinal directions are substantially parallel and all of which extend into the mold cavity (5) from the same lateral face (5c) of said mold cavity when said separation walls (6, 7) are in their molding position, said three separation walls comprising a relatively wide central wall (6) and two relatively narrow lateral walls (7) which are disposed along two respective opposite lateral faces (5f, 5g) of the mold cavity.

5. A device according to claim 4, in which the three separation walls (6, 7) are pivotally mounted about a common axis (8a).

6. A device according to any preceding claim, in which the separation wall (6, 7) includes heating means (18).

7. A method of using a device according to any preceding claim to mold padding (14) having portions (14a, 14b) constituted by foams of different flexibilities, the method comprising the following steps:
a) injecting a first foaming reaction mixture (12) onto the bottom (5a) of the mold cavity while the mold cover (3) is in its open position;
b) injecting a second foaming reaction mixture (13) onto each separation wall (6, 7) while it is in its molding position;
c) closing the mold cover (3) during foaming of the first and second reaction mixtures until the padding (14) has been obtained;
d) opening the mold cover (3);
e) unmolding the padding (14) while simultaneously displacing each separation wall (6, 7) from its molding position to its unmolding position; and
f) disengaging the padding (14) from the separation wall(s) by moving said padding in translation in the longitudinal direction of said separation wall(s), said padding being moved away from the rear portion(s) of the separation wall(s).

8. A method according to claim 7, in which, during step a), each separation wall (6, 7) is in its unmolding position, and is then moved into its molding position prior to step b).

9. A method according to claim 7, in which, during step a), each separation wall (6, 7) is in its molding position, but leaves empty gaps (15, 16) around it, the first reaction mixture being injected onto the bottom (5a) of the mold cavity through said gaps.

## Patentansprüche

1. Vorrichtung zum Formen einer Polsterung (14) mit Teilen (14a, 14b), die aus unterschiedlichen Weichschäumen gebildet sind, wobei diese Vorrichtung umfaßt:
- eine Schaumform (1), die einerseits ein als Formunterteil (2) bezeichnetes Teil, das mit einer oberen Öffnung (2a) versehen ist, und andererseits ein als Deckel bezeichnetes oberes Teil (3), das bezogen auf das Formunterteil zwischen einer geöffneten und einer geschlossenen Position beweglich ist, wobei das Formunterteil (2) und der Deckel (3) gemeinsam, wenn sich der Deckel in der geschlossenen Position befindet, einen Formhohlraum (5) begrenzen, der einen Boden (5a) und eine im wesentlichen horizontale obere Fläche (5b) und vier Seitenflächen (5c, 5d, 5f, 5g) aufweist, die die Dicke der zu formenden Polsterung bestimmt,
- und mindestens eine im wesentlichen steife und glatte Trennwand (6, 7), die bezogen auf das Formunterteil (2) zwischen einer Formposition und einer Abstreifposition beweglich ist, wobei sich die Trennwand, wenn sie sich in ihrer Formposition befindet, im wesentlichen horizontal entlang einer longitudinalen Richtung ausgehend von einer der Seitenwände (5c) des Formhohlraums erstreckt, in der Nähe dieser Seitenfläche ein hinteres Teil (6a, 7a) aufweist und durch dieses hintere Teil gestützt wird,
dadurch gekennzeichnet, daß
die Trennwand sich entlang der oberen Öffnung (2a) des Formhohlraums erstreckt, wenn sie zwischen ihrer Formposition und ihrer Abstreifposition verschoben wird, wobei die Trennwand (6, 7), wenn sie sich in ihrer Formposition befindet, weder den Boden (5a) noch die obere Fläche (5b) des Formhohlraums berührt, und wenn sich die Trennwand in ihrer Abstreifposition befindet ausreichend über das Formunterteil angehoben ist, damit eine zuvor geformte Polsterung in Längsrichtung der Trennwand von dieser entnommen werden kann, indem die Polsterung vom hinteren Teil der Trennwand entfernt wird.

2. Vorrichtung nach Anspruch 1, dadurch gekennzeichnet, daß die Trennwand (6, 7) auf das Formunterteil bezogen schwenkbar montiert ist.

3. Vorrichtung nach einem der Ansprüche 1 oder 2, dadurch gekennzeichnet, daß die Trennwand (6, 7) ein länglich gebogenes Profil aufweist.

4. Vorrichtung nach einem der vorhergehenden Ansprüche, gekennzeichnet durch drei nebeneinanderstehende Trennwände (6, 7), wobei die Längsrichtungen im wesentlichen parallel sind und daß sich alle in den Formhohlraum (5) ausgehend von der gleichen Seitenfläche (5c) dieses Formhohlraums erstrecken, wenn sich die Trennwände (6, 7) in ihrer Formposition befinden, wobei diese drei Trennwände eine relativ breite Zentralwand (6) und zwei relativ schmale Seitenwände (7) umfassen, die entlang zwei gegenüberliegenden Seitenflächen (5f, 5g) des Formhohlraums angeordnet sind.

5. Verfahren nach Anspruch 4, dadurch gekennzeichnet, daß die drei Trennwände (6, 7) um eine gemeinsame Achse (a) schwenkbar montiert sind.

6. Verfahren nach einem der vorhergehenden Ansprüche, dadurch gekennzeichnet, daß die Trennwand (6, 7) Heizeinrichtungen (18) umfaßt.

7. Verfahren zum Ausformen, einer Polsterung (14) mit Teilen (14a, 14b), die aus verschiedenen Weichschäumen gebildet ist, mit Hilfe einer Vorrichtung nach einem der vorhergehenden Ansprüche, wobei das Verfahren folgende Schritte umfaßt:
a. Einspritzen eines ersten schäumenden Reaktionsgemisches (12) auf den Boden (5a) des Formhohlraums, wobei sich der Deckel (3) der Schaumform in geöffneter Position befindet,
b. Einspritzen eines zweiten schäumenden Reaktionsgemisches (13) auf jede Trennwand (6, 7), wobei sie sich in Formposition befindet,
c. Schließen des Deckels (3) der Schaumform während des Schäumens des ersten und des zweiten Reaktionsgemisches bis die Polsterung (14) hergestellt ist,
d. Öffnen des Deckels (3) der Schaumform,
e. Abstreifen der Polsterung (14), indem jede Trennwand (6, 7) von seiner Formposition in seine Abstreifposition gebracht wird,
f. Herausnehmen der Polsterung (14) von der Trennwand oder von den Trennwänden, indem diese Polsterung in Längsrichtung der Trennwände verschoben wird und indem die Polsterung vom hinteren Teil der Trennwand oder der Trennwände entfernt wird.

8. Verfahren nach Anspruch 7, dadurch gekennzeichnet, daß während des Schrittes a. jede Trennwand (6, 7) in ihrer Abstreifposition ist und dann in ihre Formposition vor dem Schritt b. gebracht wird.

9. Verfahren nach Anspruch 7, dadurch gekennzeichnet, daß im Laufe des Schrittes a. jede Trennwand (6, 7) in ihrer Formposition ist, aber genügend Freiraum (15, 16) um diese Trennwand übrigbleibt, damit das Einspritzen des ersten Reaktionsgemisches auf den Boden (5a) des Formhohlraums durch diese Freiräume durchgeführt wird.
